# EUROPÄISCHE PATENTSCHRIFT

(11) **EP 3 180 225 B1**
(45) Veröffentlichungstag und Bekanntmachung des Hinweises auf die Patenterteilung: **06.03.2019**
(21) Anmeldenummer: 15747140.0
(22) Anmeldetag: 29.07.2015
(51) Int. Cl.: G05D 1/00, B62D 1/04, B62D 15/02, B62D 1/28, B60Q 1/00, B60Q 3/283

(54) **LENKRAD EINES KRAFTFAHRZEUGS MIT EINER IM LENKRADKRANZ VORGESEHENEN ANZEIGE**
MOTOR VEHICLE STEERING WHEEL COMPRISING A DISPLAY UNIT IN THE STEERING WHEEL RIM
VOLANT D'UN VÉHICULE À MOTEUR COMPORTANT UN VOYANT SITUÉ DANS LA JANTE DE VOLANT

(30) Priorität: 13.08.2014 DE 102014216105
(43) Veröffentlichungstag der Anmeldung: 21.06.2017
(73) Patentinhaber: Bayerische Motoren Werke Aktiengesellschaft, 80809 München (DE)
(72) Erfinder: PITZER, Franz, 85716 Unterschleissheim (DE)
(86) Internationale Anmeldenummer: PCT/EP2015/067428
(87) Internationale Veröffentlichungsnummer: WO 2016/023756

(56) Entgegenhaltungen:
- WO-A1-2015/145674
- DE-A1-102009 059 670
- US-A- 5 835 870
- US-A1- 2008 211 651
- US-A1- 2011 187 518
- US-A1- 2014 109 719

## Beschreibung

Die Erfindung betrifft ein Lenkrad eines Kraftfahrzeugs mit einer im Lenkrad-kranz vorgesehenen und dem Fahrer des Fahrzeugs nach Art einer Skalenanzeige einen Hinweis hinsichtlich des Fahrzeug-Lenkwinkels gebenden Anzeige. Alternativ lässt sich die vorliegende Erfindung aber auch durch ein Verfahren zum Anzeigen einer mit dem Lenkwinkel eines Kraftfahrzeugs in Zusammenhang stehenden Größe in Form einer Skalenanzeige auf dem Kranz eines Lenkrads des Fahrzeugs beschreiben. Zum Stand der Technik wird neben der DE 10 2011 112 134 auf die DE 10 2009 059 670 A1 sowie beispielshalber auf die US 5 835 870 A verwiesen. Daneben gehört die EP 3 127 776 A1 zum nicht vorveröffentlichten Stand der Technik. Der nächstliegende Stand der Technik ist in der DE 10 2009 05 9 670 A1 zu sehen.

Das Grundprinzip des hochautomatisierten Fahrens, auch autonomes Fahren genannt, bei dem ein zweispuriges nicht spurgebundenes Kraftfahrzeug im öffentlichen Straßenverkehr alleine durch eine Elektronikeinheit gesteuert bewegt wird, ist zumindest dem Fachmann umfassend bekannt. Dabei wird das Fahrzeug unter Berücksichtigung geeigneter aktueller Daten aus der Fahrzeugumgebung nicht nur abgebremst oder beschleunigt, sondern auch zumindest dem Straßenverlauf folgend gelenkt. Idealerweise sollte dabei das Lenkrad über geeignete Wirkmechanismen vom Lenkstrang abgekoppelt sein und auch bei Kurvenfahrt in seiner Neutralposition verharren, d.h. sich beim automatischen Lenken des Fahrzeugs nicht mit drehen, , so wie dies bspw. in der eingangs genannten US 5 835 870 A Schrift beschrieben ist..

In diesem Zusammenhang ist es aus der eingangs erstgenannten Schrift bekannt, dass dem Fahrer des Fahrzeugs eine Betriebseigenschaft, als welche auch ein autonomer Fahrbetrieb genannt ist, über eine im Lenkrad-Kranz vorgesehen Lichtquelle angezeigt wird. Die eingangs zweitgenannte Schrift (DE 10 2009 059 670 A1) beschreibt ein Lenkrad eines Flurförderfahrzeugs, über welches die Lenkwinkel-Änderungsgeschwindigkeit vorgegeben wird, so dass die aktuelle Position des Lenkrads keinen Rückschluss auf den Radlenkwinkel zulässt, weshalb dieser über Leuchtdioden nach Art einer Skalenanzeige auf dem Lenkradkranz angezeigt wird.

Insbesondere in einer länger dauerenden Einführungsphase von ein autonomes Fahren (im Folgenden wird nur noch dieser Begriff auch für das sog. hochautomatisierte Fahren verwendet) ermöglichenden Systemen in Kraftfahrzeugen, insbesondere Personenkraftwagen, wird es den Fahrern solcher Fahrzeuge schwer fallen, bedenkenlos auf das korrekte Wirken solcher Systeme zu vertrauen. Insbesondere weiß ein Fahrer im Zustand des autonomen Fahrens bei stillstehendem Lenkrad nur sehr wenig über den aktuellen Lenkwinkel des Fahrzeugs; er kann diesen nämlich nur aus der Bewegung des Fahrzeugs ableiten, wobei sich das Fahrzeug entweder auf einer durch den Fahrbahnverlauf vorgegeben Bahn bewegen kann oder sich auch in gewissen Umfang abweichend vom Fahrbahnverlauf bewegen kann; fahrgeschwindigkeitsabhängig kann der Fahrer den Fzg.-Lenkwinkel anhand der Zentrifugalkraft spüren. Der Vollständigkeit halber sei in diesem Zusammenhang noch angegeben, dass der Begriff "Fzg.-Lenkwinkel" vorliegend den zwischen der Längsachse des Fahrzeugs bei Geradeausfahrt und der Längsachse bei Fzg.-Kurvenfahrt liegenden Winkel bezeichnet; es kann ein solcher Lenkwinkel jedoch auch den sog. aktuellen "mittleren" Lenkwinkel der gelenkten Fzg.-Räder darstellen.

Die vorliegende Erfindung hat sich nun die Aufgabe gestellt, der im vorstehenden Absatz beschriebenen Verunsicherung des Fahrers im autonomen Fahrbetrieb entgegenzuwirken. Die Lösung dieser Aufgabe ergibt sich mit den Merkmalen des unabhängigen Patentanspruchs; beansprucht wird ferner ein entsprechendes Verfahren.

Erfindungsgemäß wird dem Fahrer eines autonom oder hochautomatisiert bewegten Kraftfahrzeugs auf dem Kranz des sich bei Kurvenfahrt nicht drehenden Lenkrads des Fahrzeugs eine mit dem Lenkwinkel (dem Fahrzeug-Lenkwinkel oder der mittleren Lenkwinkel der gelenkten Räder) in (geeignetem) Zusammenhang stehenden Größe in Form einer Skalenanzeige angezeigt. Damit erhält der Fahrer eine insoweit brauchbare und beruhigende Information über ein korrektes Arbeiten des Lenksystems, nachdem sich diese angezeigte Lenkwinkel-Größe während der Fahrt des Fahrzeugs in Korrelation mit anderen dem Fahrer eine Lenkbewegung des Fahrzeugs signalisierenden Informationen ändern wird. Dabei ist vorstehend die vorliegende Erfindung als Verfahren beschrieben, so dass durchaus ein Verfahrensanspruch formuliert werden kann. Alternativ ist die Erfindung jedoch auch durch einen Vorrichtungsanspruch beschreibbar, weshalb vorliegend sowohl ein Lenkrad mit den Merkmalen des Anspruchs 1 als auch ein Verfahren mit den Merkmalen des Anspruchs 2 - rückbezogen auf Anspruch 1- beansprucht wird.

An einem erfindungsgemäßen Lenkrad mit einer im Lenkradkranz vorgesehenen und dem Fahrer des Fahrzeugs nach Art einer Skalenanzeige einen Hinweis hinsichtlich des Fahrzeug-Lenkwinkels gebenden Anzeige, welche zumindest dann aktiv ist, wenn sich das Kraftfahrzeug in einem autonomen oder hochautomatisierten Fahrbetrieb mit sich auch bei Kurvenfahrt nicht drehendem Lenkrad bewegt, ist vorgesehen, dass die Anzeige geringfügig vorauseilend arbeitet und dem Fahrer somit einen Hinweis über den in einem vorausliegenden, vom Fahrer überschaubaren Streckenabschnitt von einem Steuerungssystem für den autonomen Fahrbetrieb zu stellenden Fahrzeug-Lenkwinkel gibt. Entsprechend arbeitet ein erfindungsgemäßes Verfahren, d.h. es wird dem Fahrer quasi eine Lenkwinkel-Vorschau für einen Abschnitt der vorausliegenden und für den Fahrer einsehbaren Strecke gegeben, was einfach möglich ist, da ein Steuerungssystem für autonomes Fahren über alle erforderlichen Informationen verfügt, um die für die vorausliegende Fahraufgabe nötigen Aktionen rechtzeitig einleiten zu können.

Weiterhin ist vorgesehen, dass die erfindungsgemäße Anzeige zumindest unter gewissen Randbedingungen den Fzg.-Lenkwinkel überhöht oder verringert wiedergibt. Insbesondere bei schnellerer Autobahnfahrt sind nur Kurven mit sehr geringer Krümmung zu bewältigen, wofür sehr geringe Lenkwinkel benötigt werden. Damit solche geringen Lenkwinkel oder Lenkwinkel-Änderungen überhaupt sichtbar werden, sollten diese überhöht oder vergrößert angezeigt werden. Hingegen treten beispielsweise beim Einparken des Fahrzeugs und somit bei sehr langsamer Fahrt derart große Lenkwinkel auf, dass diese geeignet verringert dargestellt werden sollten, da ansonsten der Fahrer durch die sich schnell ändere Anzeige irritiert werden könnte. Entsprechend vorstehender Schilderung ist somit die Größe oder Intensität der Überhöhung oder Verringerung des angezeigten Fzg.-Lenkwinkels von der Fahrgeschwindigkeit des Fahrzeugs abhängig.

Was die Gestaltung der Anzeige als solche betrifft, so kann diese verschiedenartig sein, vorgezogen wird jedoch jegliche beliebige Art einer Skalenanzeige, derart, dass ein größerer anzuzeigender Wert sich in der angezeigten Form über ein größeres Segment des Lenkrad-Kranzes erstreckt als ein kleinerer anzuzeigender Wert. Selbstverständlich sollte auch die Lenkrichtung geeignet angezeigt werden, so dass beispielsweise ausgehend von dem obenstehenden höchsten Punkt des sich in Neutralstellung befindenden Lenkrads die Skalenanzeige beim Befahren einer Rechtskurve nach rechts wandert und beim Befahren einer Linkskurve nach links. Stets kann dabei der aktuelle Lenkwinkel (bzw. ein verringerter oder vergrößerter Lenkrad-Winkel, der benötigt würde, um den aktuellen Lenkwinkel darzustellen, durch Hervorhebung in Farbe oder Helligkeit entsprechenden Segments auf dem Lenkrad-Kranz angezeigt werden und dem Fahrer so die Lenkbewegung am (eigentlich still stehenden) Lenkrad darstellen. Idealerweise wird das Anzeige-Segment nicht den Kranz in seiner kompletten Breite oder Tiefe einnehmen, sondern lediglich einen schmalen Ring auf dem Lenkrad-Kranz beschreiben, von welchem Ring nur ein jeweils zutreffendes Segment irgendwie hervorgehoben ist. Selbstverständlich kann die jeweilige Anzeige auch in weiterer Form geeignet aufbereitet sein, so bspw. bedämpft sein, wobei höherfrequente, quasi "nervöse" Anteile des Lenkwinkels herausgefiltert sind.

Eine vorstehend beschriebene Anzeige bspw. ein irgendwie auf dem Lenkradkranz vorgesehener Anzeige-Ring, auf dem nach Art einer Skalenanzeige erfindungsgemäß eine mit dem Lenkwinkel in Zusammenhang stehende Größe visualisiert dargestellt wird, kann auch für weitere Anzeigen für den Fahrer genutzt werden. So kann insbesondere bei Gefahren, die mit der Lenkaufgabe in Verbindung stehen, der Fahrer auf die Notwendigkeit eines manuellen Eingriffs hingewiesen werden, wobei ihm gleichzeitig Empfehlungen für einen günstigen Eingriff gegeben werden können, bspw. durch unterschiedliche Farben, Helligkeit, Art und Frequenz von Laufmustern und vielem mehr. Auch denn, wenn im autonomen Fahrbetrieb eine Übernahme der Lenkaufgabe durch den Fahrer erforderlich ist, kann eine entsprechende Aufforderung durch optische Signale (wie Blinken, Bewegungsmuster etc.) des genannten Anzeige-Rings erfolgen oder unterstützt werden.

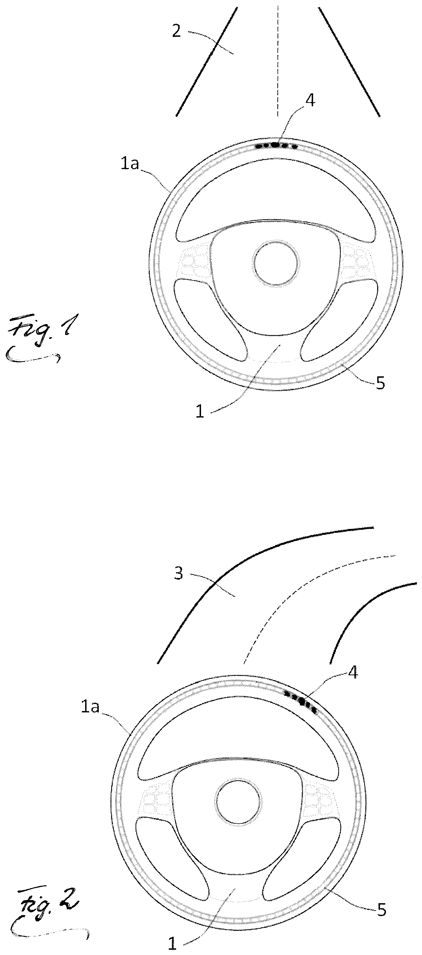

In der beigefügten Figurendarstellung ist ein erfindungsgemäßes und mit der Bezugsziffer 1 gekennzeichnetes Lenkrad 1 zweimal gezeigt, nämlich einmal oben (Fig.1) bei Geradeausfahrt des Fahrzeugs, was durch den für den Fahrer wie üblich oberhalb des Lenkrads 1 (durch die Windschutzscheibe hindurch) sichtbaren Verlauf des vorausliegenden Fahrbahnabschnitts 2 dargestellt ist, sowie unten (Fig.2) bei Befahren einer leichten Rechtskurve durch das Fahrzeug, was analog durch den für den Fahrer sichtbaren Verlauf des vorausliegenden Fahrbahnabschnitts 3 dargestellt ist. Mit der Bezugsziffer 4 ist dabei jeweils die Anzeige des Lenkwinkels bzw. der mit dem Lenkwinkel im anzuzeigenden Zusammenhang stehenden Größe auf dem Lenkrad-Kranz 1a gekennzeichnet, während der vorstehend genannte Anzeige-Ring, auf dem die Anzeige 4 sichtbar ist, mit der Bezugsziffer 5 gekennzeichnet ist. Im Vergleich der beiden Figuren erkennt man, dass das Lenkrad 1 selbst stillsteht, d.h. die Speichen des Lenkrads 1 verdeutlichen, dass sich das Lenkrad 1 zwischen der Geradeausfahrt (Fig.1) und dem Befahren der leichten Rechtskurve (Fig.2) im autonomen Fahrbetrieb nicht verdreht (hat), wohl aber die Anzeige 4 auf dem Anzeige-Ring 5 um ein gewisses Maß im Uhrzeigersinn nach rechts gewandert ist. Dabei ist diese Anzeige 4 vorliegend durch wenige in einer bestimmten Farbe leuchtende Segmente des aus einer Vielzahl solcher leuchtfähigen Segmente gebildeten und sich über dem gesamten Lenkrad-Kranz 1a erstreckenden Anzeige-Rings 5 gebildet.

## Patentansprüche

1. Lenkrad eines Kraftfahrzeugs mit einer im Lenkradkranz (1a) vorgesehenen und dem Fahrer des Fahrzeugs nach Art einer Skalenanzeige einen Hinweis hinsichtlich des Fahrzeug-Lenkwinkels gebenden Anzeige (4),
**dadurch gekennzeichnet, dass** diese Anzeige (4) mit sich auch bei Kurvenfahrt des sich in einem autonomen oder hochautomatisierten Fahrzustand bewegenden Fahrzeugs nicht drehendem Lenkrad (1) geringfügig vorauseilend arbeitet und dem Fahrer somit einen Hinweis über den in einem vorausliegenden, vom Fahrer überschaubaren Streckenabschnitt von einem Steuerungssystem für den autonomen Fahrbetrieb zu stellenden Fahrzeug-Lenkwinkel gibt,
wobei die Anzeige (4) zumindest unter gewissen Randbedingung den Fzg.-Lenkwinkel überhöht oder verringert wiedergibt, derart, dass die Überhöhung oder Verringerung des angezeigten Fzg.-Lenkwinkels von der Fahrgeschwindigkeit des Fahrzeugs abhängig ist.

2. Verfahren zum Anzeigen einer mit dem Lenkwinkel eines autonom oder hochautomatisiert bewegten Kraftfahrzeugs in Zusammenhang stehenden Größe in Form einer Skalenanzeige auf dem Kranz (1a) eines sich bei Kurvenfahrt nicht drehenden Lenkrads (1) des Fahrzeugs nach Anspruch 1.

## Claims

1. A steering wheel of a motor vehicle having a display (4) provided in the steering wheel rim (1a) and providing the driver of the vehicle with an indication of the vehicle steering angle in the manner of a scalar display,
characterised in thatthis display (4), with the steering wheel (1) not rotating, not even when the vehicle, moving in an autonomous or highly automated driving mode, is negotiating curves, operates in a slightly anticipatory manner and thus gives the driver an indication of the vehicle steering angle to be set by a control system for the autonomous driving mode on a stretch of road that lies ahead and is visible to the driver, wherein the display (4), at least under certain boundary conditions, displays the vehicle steering angle in an exaggerated or reduced manner, in such a way that the exaggeration or reduction of the displayed vehicle steering angle is dependent on the driving speed of the vehicle.

2. A method for displaying a variable related to the steering angle of a motorvehicle moved autonomously or in a highly automated manner, said variable being displayed in the form of a scalar display on the rim (1a) of a steering wheel (1) of the vehicle according to claim 1, which steering wheel does not rotate when curves are negotiated.

## Revendications

1. Volant de direction d'un véhicule comportant un affichage (4) situé sur la couronne (1a) du volant et donnant au conducteur du véhicule une indication concernant l'angle de direction du véhicule sous la forme d'un affichage d'échelle,
**caractérisé en ce que**
cet affichage (4) travaille également un peu à l'avance avec le volant de direction (1) ne se tournant pas lors d'un déplacement en virage du véhicule se déplaçant dans un mode de conduite autonome ou fortement automatisé, et donne ainsi au conducteur une indication concernant l'angle de direction du véhicule devant être établi par un système de commande pour le mode de conduite autonome sur un segment de chaussée situé à l'avant pouvant être aperçu par le conducteur, l'affichage (4) reproduisant au moins sous une condition marginale donnée, l'angle de direction de véhicule en l'augmentant ou en le diminuant de sorte que l'augmentation ou la diminution de l'angle de direction du véhicule affiché dépende de la vitesse de déplacement du véhicule.

2. Procédé d'affichage d'une grandeur associée à l'angle de direction d'un véhicule se déplaçant de façon autonome ou fortement automatisée sous la forme d'un affichage d'échelle sur la couronne (1a) du volant de direction (1) du véhicule ne se tournant pas lors d'un déplacement en virage conforme à la revendication 1.
